# EUROPEAN PATENT APPLICATION

(11) **EP 3 128 189 A1**
(43) Date of publication of application: **08.02.2017**
(21) Application number: 15179874.1
(22) Date of filing: 05.08.2015
(51) Int. Cl.: F16B 5/02, F16B 25/00, F16B 43/00

(54) **ANCHOR DEVICE FOR FIXING AN INSULATING BOARD TO A BUILDING STRUCTURE**

(71) Applicant: HILTI Aktiengesellschaft, 9494 Schaan (LI)
(72) Inventor: Brunhuber, Thomas, 6811 Göfis (AT); Boeckle, Juergen, 9494 Schaan (LI); Martin, Simon, 6811 Goefis (AT); Rosenkranz, Falk, 9658 Wildhaus (CH)
(74) Representative: Hilti Aktiengesellschaft Corporate Intellectual Property

(57) **Abstract**

The invention relates to an anchor device for fixing an insulating board to a building structure. Such a device is provided with a screw (20) having a self-tapping thread (22) for tapping concrete and/or masonry, and a retaining washer (10), connected to the screw (20), for securing the insulating board to the screw (20). According to the invention, the screw (20) is made of stainless steel.

## Description

The invention relates to a device for fixing an insulating board to a building structure, in particular to a concrete or masonry building structure, more particularly to a facade wall, according to the preamble of claim 1.

Such a device comprises a screw having a self-tapping thread for tapping concrete and/or masonry, and a retaining washer, connected to the screw, for securing the insulating board to the screw.

It is known to use carbon-steel screw anchors to fix thermal insulations. For example, the anchor named HUS 6x140 offered by Hilti Deutschland AG has been used for that purpose.

WO14040995A1 teaches a method for producing a self-tapping screw, in which a blank consisting of a steel is hardened in a martensitic manner.

An object of the invention is to provide a device for fixing an insulating board to a building structure having particularly good thermal and mechanical properties whilst being economic and easy to install.

This object is achieved by a device having the features of claim 1. Dependent claims refer to preferred embodiments of the invention.

According to the invention, the screw is made of stainless steel. The invention is based on the finding that in many cases, the heat transmission through an anchor device is determined to a relatively large degree by the thermal conductivity of the screw. This can hold true even in cases where an extended retaining washer that reaches within the insulating board is used, thereby allowing the screw to end relatively deep within the insulating plate. In view of the above, the invention proposes that the thermally highly relevant screw comprises stainless steel. The invention is based on the fact that stainless steel, even of a low cost type (e.g. A2), features a significant reduced thermal conductivity when compared with carbon steel (e.g. λ ≈ 15 W/(m · K) for stainless steel, compared with λ ≈ 55 W/(m · K) for carbon steel). Therefore, unwanted heat transmission through the anchor device can be efficiently reduced without compromising on mechanical and installation properties.

According to the invention, the screw is made of stainless steel, i.e. the screw comprises, for its most part, stainless steel. The screw can, however, have one or more additional coating layers. The insulating board is a heat insulating board and can, for example, comprise min-eral wool, polystyrene or rigid foam. The building structure is preferentially made of concrete or masonry. The inventive screw is preferentially a so-called concrete screw, which can be screwed into an unthreaded borehole in concrete and/or masonry, and whose thread forms a mating thread in the wall of this borehole during screwing-in of the screw. The retaining washer has a through hole through which the screw passes through. Preferentially, the retaining washer has a larger diameter than the screw for reliably securing the insulating board.

Preferably, the screw is made of A2 stainless steel. This type of steel has proven particularly useful for use in an anchor device for fixing insulating boards.

According to another preferred embodiment of the invention, at least the thread of the screw is carburized. In an even further embodiment, the carburizing step is followed by a quenching step. In this embodiment, the thread can be provided with sufficient hardness enabling it to cut the mating thread into the concrete or masonry, respectively, in a particularly easy and cost-effective manner. Since carburizing is a diffusion controlled process, carburization can be limited to the outer shell of the screw, so that the relatively low thermal conductivity of untreated stainless steel will remain applicable for the majority of screw's cross-sectional area. Whilst carburized screws might be more susceptible to corrosion, this can usually be tolerated because galvanized carbon steel elements are considered to be sufficient for the intended application, which is the fixing of thermal insulation.

Advantageously, the retaining washer is made of plastic material. This can be useful in view of costs and thermal properties.

Moreover, it is advantageous that the screw has a head and a shaft, the thread being provided on the shaft. In particular, the head might have a drive for applying torque to the screw, e.g. a polygonal structure.

Furthermore, it is preferred that the retaining washer has a plate portion and a sleeve portion, wherein the head of the screw is located in the sleeve portion and rests on the retaining washer within the sleeve portion. According to this embodiment, the washer can penetrate the insulating board with its sleeve portion and the screw can have its head and its rear end located within the sleeve portion, thereby within the insulating board. This can further lower overall thermal conductivity.

The invention is explained in greater detail below with reference to preferred exemplary embodiments, which are depicted schematically in the accompanying drawing, where individual features of the exemplary embodiments presented below can be implemented essentially either individually or in any combination within the scope of the present invention.

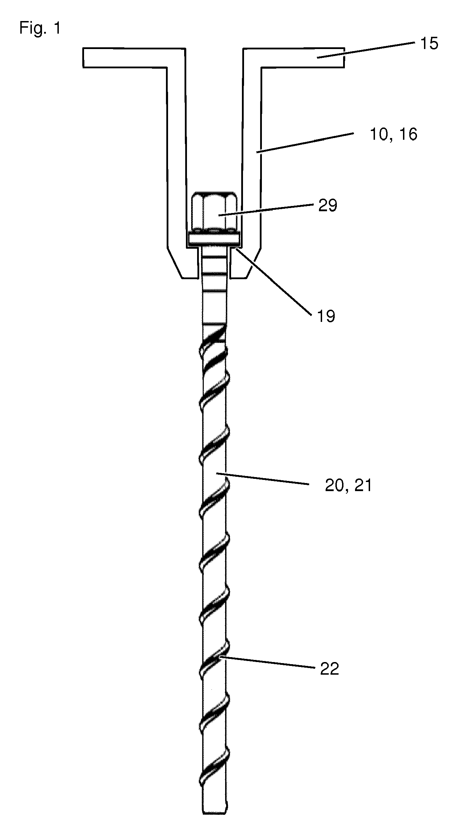

Figure 1: partial sectional view an inventive anchor device.

An example of a device for fixing an insulating board to a building structure, in particular to a concrete or masonry building structure, for example to a facade wall, is shown in fig. 1. The anchor device comprises a plastic retaining washer 10 for holding the insulating board, and a steel screw 20 that passes through washer 10. The screw 20 has a shaft 21 and a screw head 29. On the surface of the shaft 21, a thread 22 is provided, which is designed for cutting concrete and/or masonry. The head 29 is arranged at the rear end of the shaft 21 and provides a drive for applying torque to the screw. In the shown embodiment, the drive is a hexagonal head. The screw 20, at least its shaft 21, is made of stainless steel. Preferentially, the screw 20 can be provided with one or more additional coatings.

The retaining washer 10 has a plate portion 15 and a sleeve portion 16 projecting from the plate portion 15. The plate portion 15 and the sleeve portion 16 define a through hole, in which the screw 20 is received in such a way that the head 29 of the screw 20 rests on a stop 19 provided in the sleeve portion 16, so that the stop 19 prevents the screw 20 from being pulled-out of the retaining washer 10.

When installing the fixing device, a hole is provided in the building structure. The device is passed, with screw 20 first, through the insulating board, and the screw 20 is screwed into the hole in the building structure, whereby the thread 22 cuts a mating thread into the wall of the hole in the building structure. During screwing-in of the screw 20, the sleeve portion 16 penetrates the insulating board and the plate portion 15 comes to rest on the surface of the insulating board, thereby securing the insulating board to the screw 20 and to the building structure. Connection between the plate portion 15 and the screw 20 is provided by the stop 19 holding the head 29 of the screw 20.

## Claims

1. Anchor device for fixing an insulating board to a building structure, comprising a screw (20) having a self-tapping thread (22) for tapping concrete and/or masonry, and
a retaining washer (10), connected to the screw (20), for securing the insulating board to the screw (20),
**characterized in that**
the screw (20) is made of stainless steel.

2. Device according to claim 1,
**characterized in that**
the screw (20) is made of A2 stainless steel.

3. Device according to any one of the proceeding claims,
**characterized in that**
at least the thread (22) of the screw (20) is carburized.

4. Device according to any one of the proceeding claims,
**characterized in that**
the retaining washer (10) is made of plastic material.

5. Device according to any one of the proceeding claims,
**characterized in that**
the screw (20) has a head (29) and a shaft (21), the thread (22) being provided on the shaft (21), and
the retaining washer (10) has a plate portion (15) and a sleeve portion (16), wherein the head of the screw (20) is located in the sleeve portion (16) and rests on the retaining washer (10) within the sleeve portion (16).
